# EUROPÄISCHE PATENTSCHRIFT

(11) **EP 2 060 118 B1**
(45) Veröffentlichungstag und Bekanntmachung des Hinweises auf die Patenterteilung: **27.07.2016**
(21) Anmeldenummer: 07819607.8
(22) Anmeldetag: 06.11.2007
(51) Int. Cl.: H04N 7/18, B60R 19/48, B60R 1/00

(54) **VERFAHREN ZUR ERZEUGUNG EINES GESAMTBILDS DER UMGEBUNG EINES KRAFTFAHRZEUGS**
METHOD FOR THE GENERATION OF A FULL IMAGE OF THE SURROUNDINGS OF A MOTOR VEHICLE
PROCÉDÉ DE GÉNÉRATION D'UNE VUE D'ENSEMBLE DE L'ENVIRONNEMENT D'UN VÉHICULE À MOTEUR

(30) Priorität: 09.11.2006 DE 102006052779
(43) Veröffentlichungstag der Anmeldung: 20.05.2009
(73) Patentinhaber: Bayerische Motoren Werke Aktiengesellschaft, 80809 München (DE)
(72) Erfinder: RUSS, Artur, 82362 Weilheim (DE); DEBON, Renaud, 80379 München (DE); BEMBENEK, Sascha, 81371 München (DE)
(74) Vertreter: Kammermeier, Peter Frank
(86) Internationale Anmeldenummer: PCT/EP2007/009587
(87) Internationale Veröffentlichungsnummer: WO 2008/055644

(56) Entgegenhaltungen:
- EP-A- 1 179 958
- EP-A- 1 291 668
- DE-A1- 19 947 766
- DE-A1-102005 018 408
- US-A1- 2005 225 439

## Beschreibung

Die Erfindung betrifft ein Verfahren zur Erzeugung eines Gesamtbilds der Umgebung eines Kraftfahrzeugs unter Verwendung einer mit dem Kraftfahrzeug verbundenen Bildsensoreinrichtung, die Bilddaten in einem ersten Erfassungsbereich der Fahrzeugumgebung liefert.

Solche Verfahren sind vielfältig aus dem Stand der Technik bekannt. Bekannt sind beispielsweise auch Bildsensoreinrichtungen, bei welchen zur Vergrößerung des effektiven Erfassungsbereichs der Bildsensoreinrichtung die Einzelbilder mehrerer Einzelkameras zu einem Gesamtbild zusammengesetzt werden. Die WO 03/051671 A1 beschreibt eine solche Bildsensoreinrichtung am Beispiel einer Rückfahrkamera.

Zur Bereitstellung eines großen Erfassungsbereichs einer solchen Bildsensoreinrichtung müssen entweder sehr teure weitwinklige Kameras verwendet werden oder es müssen ausreichend viele Einzelkameras so am Kraftfahrzeug angeordnet werden, dass zumindest die Vereinigungsmenge der Einzelerfassungsbereiche den für eine bestimmte Anwendung gewünschten gesamten Erfassungsbereich abdeckt. Stark weitwinklige Kamerasysteme besitzen meist den Nachteil erheblicher Bildverzerrungen insbesondere in den Randbereichen des Bildes. Die Verwendung zusätzlicher Kameras birgt neben den oft erheblichen Kosten für die Kameras selbst sowie für eine geeignete nachgelagerte Bildverarbeitung auch den Nachteil, dass eine geeignete Anbringung der Kameras am Kraftfahrzeug in vielen Fällen nicht ohne Weiteres möglich ist. Insbesondere die Einbeziehung des vor der Fahrzeugfront liegenden Umgebungsbereichs in den Erfassungsbereich, beispielsweise zum Zweck der Erzeugung eines vollständigen Rundumsichtbilds, erfordert die Anbringung einer Kamera an der Fahrzeugfront. Die Anbringung einer Kamera an der Fahrzeugfront kann jedoch mit Design-Nachteilen verbunden sein und ist technisch meist sehr aufwändig. Eine Frontkamera muss robust gegen die erheblichen an der Fahrzeugfront wirkenden äußeren Einflüsse ausgelegt werden und erfordert unter Umständen eine mechanische Schutzvorrichtung. Die Bereitstellung einer Frontkamera ist daher technisch schwierig und in der Regel kostspielig. Ohne eine Frontkamera hingegen ergibt sich ein für viele Anwendungen nicht zufriedenstellender Erfassungsbereich der Bildsensoreinrichtung. Dieselbe bzw. eine ähnliche Problematik besteht bezüglich der Einbeziehung des hinter dem Fahrzeugheck liegenden Umgebungsbereichs in den Erfassungsbereich, denn auch das Vorsehen einer Heckkamera an einem Kraftfahrzeug ist in der Regel technisch aufwändig und kann mit Design-Nachteilen verbunden sein.

Aufgabe der Erfindung ist es, ein einfaches Verfahren zu schaffen, durch welches mit geringem Aufwand ein Gesamtbild der Umgebung eines Kraftfahrzeugs in einem großen Erfassungsbereich erzeugt werden kann.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Erfindungsgemäß wird ein Gesamtbild auf Basis von Bilddaten der Bildsensoreinrichtung sowie auf Basis von Abstandsdaten einer zusätzlich zur Bildsensoreinrichtung vorgesehenen Abstandssensoreinrichtung erzeugt. Die zusätzlich zur Bildsensoreinrichtung verwendete Abstandssensoreinrichtung liefert Abstandsdaten in einem Erfassungsbereich der Fahrzeugumgebung, der sich von dem Erfassungsbereich der Bildsensoreinrichtung unterscheidet. Insbesondere deckt der Erfassungsbereich der Abstandssensoreinrichtung einen Zusatzbereich der Fahrzeugumgebung ab, der nicht durch den Erfassungsbereich der Bildsensoreinrichtung abgedeckt wird. Die Abstandsdaten, die sich auf diesen Zusatzbereich beziehen, können somit verwendet werden, um einen zusätzlichen Bildteil im Gesamtbild zu erzeugen, welcher den Zusatzbereich repräsentiert. Der zusätzliche Bildteil kann auf Basis der Abstandsdaten der Abstandssensoreinrichtung für den Zusatzbereich die Entfernungsverhältnisse zwischen dem Kraftfahrzeug und Objekten in der Fahrzeugumgebung visualisieren und kann eine Abschätzung des Gefahrenpotenzials im Zusatzbereich unterstützen.

Durch das erfindungsgemäße Verfahren kann ein Gesamtbild erzeugt werden, dessen effektiver Erfassungsbereich über den Erfassungsbereich der Bildsensoreinrichtung hinausgeht, ohne dass weitere Bildsensoren, insbesondere Kameras, erforderlich sind.

Durch die Verwendung einer Abstandsensoreinrichtung kann bei geeigneter Ausführung der Erfindung gegenüber der Verwendung sehr weitwinkliger Kameras sogar eine verbesserte effektive Anzeigegenauigkeit erreicht werden, da weitwinklig aufgenommene Kamerabilder in den Randbereichen stark verzerrt und nur schwer korrigierbar sind. Die Erfindung bietet eine elegante Lösung zum "Schließen von Lücken" in der kamerabasierten Überwachung der Fahrzeugumgebung, die einer übermäßigen Ausreizung der Kamera- und Bildverarbeitungstechnik in puncto Genauigkeit und Kosten überlegen sein kann.

Die Erfindung impliziert die Verwendung einer Abstandssensoreinrichtung. Abstandssensoreinrichtungen für Kraftfahrzeuge sind heute weit verbreitet und kostengünstig verfügbar. Die erfindungsgemäß verwendete Abstandssensoreinrichtung kann insbesondere gerätetechnisch so ausgeführt werden, dass sie ohne Vorhandensein von Kameras auch eigenständig als Abstandsgeber für ein Fahrerassistenzsystem dienen kann. Diese Weiterbildung der Erfindung erlaubt es einem Fahrzeughersteller beispielsweise, seinen Kunden die Abstandssensoreinrichtung als Ausstattungs-Grundvariante und das erweiterte erfindungsgemäß betriebene System als optionale Sonderausstattung anzubieten, ohne die Abstandssensoreinrichtung zwischen den beiden Varianten gerätetechnisch modifizieren zu müssen.

Gemäß einer bevorzugten Ausführungsform des erfindungsgemäßen Verfahrens wird die den Zusatzbereich betreffende Abstandsinformation in ein virtuelles Abbild des Zusatzbereichs umgesetzt. Die Erzeugung des Bildteils, der den Zusatzbereich repräsentiert, kann grundsätzlich in ähnlicher oder gleicher Art und Weise erfolgen, wie dies bereits heute für ausschließlich auf Basis von Abstandssensorik funktionierende Fahrerassistenzsysteme bekannt ist. Beispielsweise sind unter der Bezeichnung "Park Distance Control" (PDC) bereits heute Vorrichtungen und Verfahren bekannt, bei welchen ein virtuelles Abbild der Fahrzeugumgebung, gegebenenfalls inklusive eines Abbilds des Fahrzeugs selbst, aus der Vogelperspektive erzeugt wird. In diesem Abbild sind die durch Ultraschallsensorik überwachten Bereiche der Fahrzeugumgebung gekennzeichnet und gegebenenfalls farblich oder auf andere Art und Weise in mehrere Entfernungsstufen unterteilt. Die ultraschallbasierte Detektion von Objekten in diesen überwachten Bereichen der Fahrzeugumgebung führt dazu, dass in dem virtuellen Abbild die entsprechenden Bildbereiche durch Veränderungen der Farbe und/oder Helligkeit hervorgehoben werden. Das Vorhandensein der Objekte wird somit in dem virtuellen Abbild der Fahrzeugumgebung visualisiert. Auf diese Weise werden dem Nutzer eines solchen Systems bzw. Verfahrens Abstandsdaten bildlich zur Kenntnis gebracht.

Das Gesamtbild wird erfindungsgemäß erzeugt als Kombination des ersten, auf Bilddaten der Bildsensoreinrichtung basierenden, Bildteils und des zusätzlichen zweiten, auf Bilddaten der Abstandssensoreinrichtung basierenden, Bildteils. Steht für die Erzeugung des zweiten Bildteils ein Bild, welches beispielsweise als virtuelles Abbild der Fahrzeugumgebung - insbesondere des Zusatzbereichs - ausgebildet sein kann, zur Verfügung, kann das Gesamtbild in an sich bekannter Art und Weise durch Zusammensetzen der Bildteile erzeugt werden. Es kann dann beispielsweise bei einem Rundumsicht-System statt des Bildes einer Frontkamera (bzw. dessen perspektivischer Transformation) ein virtuelles, auf Abstandsdaten basierendes Abbild des Frontbereichs in das Gesamtbild integriert werden. Der Frontbereich stellt dabei den Zusatzbereich im Sinne der vorliegenden Erfindung dar.

Die Übergänge zwischen den verwendeten Teilbildern können im Gesamtbild als unmittelbar sichtbare Schnittkanten ausgeführt werden. Dies ist die technisch einfachste Lösung, welche aufgrund des ohnehin bestehenden unterschiedlichen Charakters der einzelnen Bildteile (typischerweise Realbild bzw. photorealistisches Bild bei erstem Bildteil vs. typischerweise virtuelles Abbild bei zweitem Bildteil) nur eine geringe Beeinträchtigung der Ästhetik des Gesamtbilds zur Folge hat.

Alternativ kann dennoch eine weiche Überblendung zwischen den Teilbildern vorgesehen werden, um solche sichtbaren Schnittkanten zu vermeiden und im Gesamtbild einen weichen optischen Übergang zwischen dem ersten und dem zweiten Bildteil vorzusehen. Je nach Vorliebe und Übungsgrad des Betrachters kann diese Art der Darstellung das Gesamtbild übersichtlicher erscheinen lassen und dazu führen, dass dieses durch einen Betrachter leichter intuitiv interpretierbar ist. Auch eine unter Umständen nach ästhetischen Gesichtspunkten gefälligere Darstellungsform wird so ermöglicht. Dieselben Effekte können Überblendungseffekte auch an den Rändern der Bildteile bewirken.

Vorzugsweise überlappen die Teilbilder der Bildsensoreinrichtung bzw. der Abstandssensoreinrichtung. Sichtbare Schnittkanten können dann geeignet - insbesondere ästhetisch gefällig - festgelegt werden. Überblendungen werden erst durch eine Überlappung ermöglicht.

Eine andere Möglichkeit des Umgangs mit überlappenden Teilbildern der Bildsensoreinrichtung bzw. der Abstandssensoreinrichtung ist die Überlagerung der Teilbilder. Beispielsweise kann im Überlappungsbereich ein virtuelles Abbild, welches die von der Abstandssensoreinrichtung gelieferte Abstandsinformation visualisiert, mit hoher Transparenz einem photorealistischen Bild überlagert werden, welches auf Basis von Bilddaten der Bildsensoreinrichtung erzeugt wird. Dem Benutzer wird somit im Überlappungsbereich ein durch die Abstandsinformation augmentiertes photorealistisches Bild dargestellt.

Die Erfindung ist selbstverständlich in unverändertem Maße auch dann als vorteilhaft anzusehen, wenn die Teilbilder nicht überlappen oder aneinander angrenzen. Zur besseren Bildschirmausnutzung können bei nicht aneinander angrenzenden Teilbildern die Zwischenbereiche gegebenenfalls gegenüber den abgedeckten Bereichen der Fahrzeugumgebung verkleinert zur Anzeige gebracht werden.

Die Bildsensoreinrichtung im Sinne der Erfindung kann eine oder mehrere Kameras umfassen. Bei Verwendung mehrerer Kameras kann der erste Bildteil des Gesamtbilds, welcher auf Bilddaten der Bildsensoreinrichtung basiert, aus mehreren Teilbildern einzelner Kameras zusammengesetzt sein. Vorzugsweise umfasst auch die Abstandssensoreinrichtung mehrere Sensorkomponenten. Die Bildteile im Sinne der Erfindung können jeweils einen zusammenhängenden oder auch mehrere einzelne Bildbereiche umfassen.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen
- Fig. 1: ein erstes Ausführungsbeispiel eines Gesamtbilds der Umgebung eines Kraftfahrzeugs, welches einen auf Kamerabildern basierenden ersten Bildteil und einen auf Abstandsdaten basierenden zweiten Bildteil umfasst,
- Fig. 2: eine Strukturskizze desselben Gesamtbilds,
- Fig. 3: ein zweites Ausführungsbeispiel eines Gesamtbilds der Umgebung eines Kraftfahrzeugs, welches einen auf Kamerabildern basierenden ersten Bildteil und einen auf Abstandsdaten basierenden zweiten Bildteil umfasst, und
- Fig. 4: eine Strukturskizze eines Gesamtbilds gemäß einem dritten Ausführungsbeispiel mit überlappendem erstem und zweitem Bildteil.

Ein Kraftfahrzeug verfügt über ein Umfeldüberwachungssystem, welches geeignet ist, eine Rundumsicht der Fahrzeugumgebung aus der Vogelperspektive, auf einem Monitor im Kraftfahrzeuginnenraum darzustellen. Das Gesamtbild der Rundumsicht wird auf Basis von Bilddaten zweier Kameras und Abstandsdaten eines ultraschallbasierten Parkhilfesystem erzeugt.

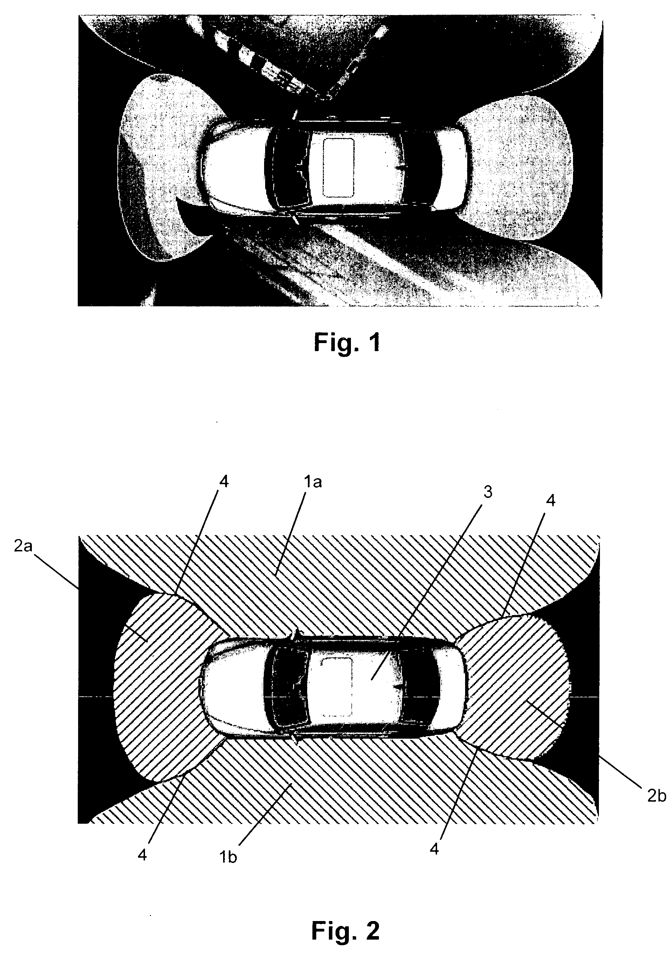

Fig. 1 zeigt ein erstes Ausführungsbeispiel des Gesamtbilds, welches einen auf Kamerabildern basierenden ersten Bildteil und einen auf Abstandsdaten basierenden zweiten Bildteil umfasst.

Fig. 2 zeigt eine Strukturskizze desselben Gesamtbilds. Der erste Bildteil umfasst die Bildbereiche 1a und 1 b. Jeder dieser Bildbereiche basiert im Wesentlichen auf Bilddaten einer Seitenkamera des Kraftfahrzeugs. Die von den Kameras aufgenommenen Bilder werden geeignet verzerrt bzw. transformiert, um die virtuelle Vogelperspektive zu erzeugen. Der zweite Bildteil umfasst die Bildbereiche 2a und 2b. Die Darstellung in diesen Bildbereichen entspricht im Wesentlichen derjenigen von aus dem Stand der Technik bekannten Abstandsvisualisierungen. Das Gesamtbild enthält auch ein Abbild 3 des Kraftfahrzeugs selbst.

Beim in Fig. 1 dargestellten Gesamtbild sind die Bildteile durch sichtbare Schnittkanten 4 (vgl. Fig. 2) getrennt. Auch an den Stellen, an welchen die Bildteile nicht aneinander angrenzen, sind die Darstellungen durch sichtbare Schnittkanten beschnitten.

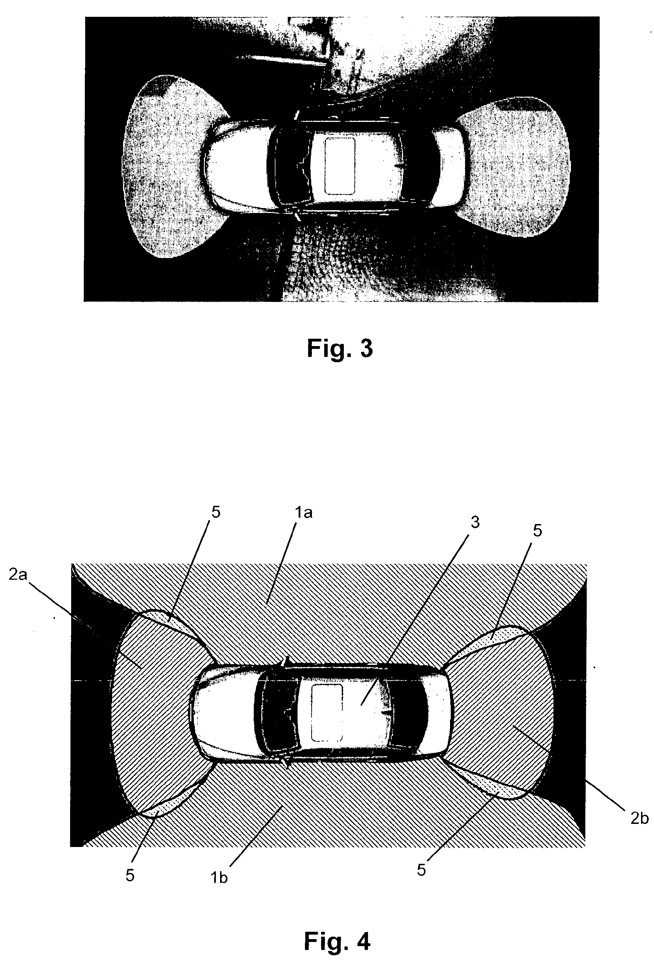

Demgegenüber wird der erste Bildteil bei dem in Fig. 3 dargestellten Gesamtbild an seinen Grenzen weich optisch ausgeblendet. Je nach Vorliebe und Übungsgrad des Betrachters kann dies die Darstellung übersichtlicher gestalten und dazu führen, dass diese leichter intuitiv interpretierbar ist.

Fig. 4 zeigt eine Strukturskizze eines Gesamtbilds gemäß einem dritten Ausführungsbeispiel, in welchem der erste und zweite Bildteil überlappen. So kann beispielsweise am Übergang zwischen dem ersten Bildteil (1a, 1b) und dem zweiten Bildteil (2a, 2b) der erste Bildteil weich ausgeblendet werden und der zweite Bildteil den ersten Bildteil teiltransparent überlagern. Auf diese Weise werden in den Bereichen, in welchen die beiden Bildteile überlappen, sowohl die Bilddaten der Kameras als auch die Abstandsdaten des ultraschallbasierten Parkhilfesystems repräsentiert. Außerdem kann auch diese Art der Darstellung je nach Vorliebe und Übungsgrad des Betrachters das Gesamtbild übersichtlicher gestalten und dazu führen, dass dieses leichter intuitiv interpretierbar ist. In Fig. 4 sind die Überlappungsbereiche 5 zwischen dem ersten Bildteil (1a, 1 b) und dem zweiten Bildteil (2a, 2b) angedeutet.

## Patentansprüche

1. Verfahren zur Erzeugung eines zumindest einen ersten Bildteil (1a, 1b) und einen nicht mit dem ersten Bildteil überlappenden zweiten Bildteil (2a, 2b) enthaltenden Gesamtbilds zur Darstellung einer Rundumsicht der Umgebung eines Kraftfahrzeugs aus der Vogelperspektive unter Verwendung einer mit dem Kraftfahrzeug verbundenen Bildsensoreinrichtung, die Bilddaten in einem ersten Erfassungsbereich der Fahrzeugumgebung liefert,
**dadurch gekennzeichnet,**
**dass** der erste Bildteil des Gesamtbilds als Realbild bzw. photorealistisches Bild ausgebildet ist, welches auf Bilddaten der Bildsensoreinrichtung aus dem ersten Erfassungsbereich basiert,
**dass** zusätzlich zur Bildsensoreinrichtung eine mit dem Kraftfahrzeug verbundene Abstandssensoreinrichtung Verwendung findet, welche Abstandsdaten in einem zweiten mit dem ersten Erfassungsbereich überlappenden Erfassungsbereich der Fahrzeugumgebung liefert,
**dass** der zweite Erfassungsbereich einen Zusatzbereich der Fahrzeugumgebung abdeckt, welcher nicht durch den ersten Erfassungsbereich abgedeckt wird,
**dass** der zweite Bildteil als virtuelles, auf Abstandsdaten aus dem zweiten Erfassungsbereich basierendes Abbild der Fahrzeugumgebung aus der Vogelperspektive ausgebildet ist und
zumindest teilweise außerhalb des ersten Bildteils liegt, wobei im Gesamtbild ein weicher optischer Übergang zwischen dem ersten und dem zweiten Bildteil vorgesehen wird.

## Claims

1. A method for generating a total image, containing at least a first image part (1 a, 1 b) and a second image part (2a, 2b) which does not overlap with the first image part, to present an all-round view of the surroundings of a motor vehicle from a bird's-eye perspective using an image sensor device which is connected to the motor vehicle and provides image data in a first acquisition range of the vehicle surroundings,
**characterised in that**
the first image part of the total image is formed as a real image or photorealistic image which is based on image data of the image sensor device from the first acquisition range,
**in that** in addition to the image sensor device, a distance sensor device is used which is connected to the motor vehicle and which provides distance data in a second acquisition range, which overlaps with the first acquisition range, of the vehicle surroundings,
**in that** the second acquisition range covers an additional range of the vehicle surroundings which is not covered by the first acquisition range, and
**in that** the second image part is formed as a virtual image of the vehicle surroundings from a bird's-eye perspective, which virtual image is based on distance data from the second acquisition range, and is at least partly outside the first image part, a soft visual transition between the first image part and the second image part being provided in the total image.

## Revendications

1. Procédé d'obtention d'une image globale comprenant au moins une première partie d'image (1a, 1b) et une seconde partie d'image (2a, 2b) ne chevauchant pas la première partie d'image pour représenter une vue panoramique de l'environnement d'un véhicule en vue de dessus, en utilisant un dispositif de capteur d'image lié au véhicule qui fournit des données d'image dans une première zone de détection de l'environnement du véhicule,
**caractérisé en ce que**
la première partie d'image de l'image globale est réalisée sous la forme d'une image réelle ou d'une image photo-réaliste qui est basée sur des données d'image du dispositif de capteur d'image concernant la première zone de détection,
en plus du dispositif de capteur d'image on utilise un dispositif de capteur de distance lié au véhicule qui fournit des données de distance dans une seconde zone de détection de l'environnement du véhicule chevauchant la première zone de détection,
la seconde zone de détection recouvre une zone supplémentaire de l'environnement du véhicule qui n'est pas recouverte par la première zone de détection,
la seconde partie d'image est réalisée en vue de dessus sous la forme d'une représentation virtuelle de l'environnement du véhicule basée sur des données de distance concernant la seconde zone de détection, et est située au moins partiellement à l'extérieur de la première partie d'image, en vue globale, une transition optique douce étant prévue entre la première partie d'image et la seconde partie d'image.
